# EUROPÄISCHE PATENTSCHRIFT

(11) **EP 2 049 575 B1**
(45) Veröffentlichungstag und Bekanntmachung des Hinweises auf die Patenterteilung: **12.01.2011**
(21) Anmeldenummer: 07729121.9
(22) Anmeldetag: 15.05.2007
(51) Int. Cl.: C08F 8/26, C08F 8/34, C08F 293/00, C08F 2/38, C08F 6/02, C08F 220/14, C08L 53/00, C09D 153/00, C09J 153/00, C08C 19/20, C08C 19/32

(54) **VERFAHREN ZUR HERSTELLUNG VON HYDROXYTELECHELEN ATRP-PRODUKTEN**
PROCESS FOR PREPARING HYDROXY-TELECHELIC ATRP PRODUCTS
PROCÉDÉ DE FABRICATION DE PRODUITS HYDROXYTÉLÉCHÉLIQUES D'ATRP

(30) Priorität: 09.08.2006 DE 102006037351
(43) Veröffentlichungstag der Anmeldung: 22.04.2009
(73) Patentinhaber: Evonik Röhm GmbH, 64293 Darmstadt (DE)
(72) Erfinder: BALK, Sven, 60594 Frankfurt (DE); LÖHDEN, Gerd, 45136 Essen (DE); TRÖMER, Christine, 63546 Hammersbach (DE); MÄRZ, Monika, 63755 Alzenau (DE); MIESS, Christine, 63796 Kahl (DE)
(86) Internationale Anmeldenummer: PCT/EP2007/054669
(87) Internationale Veröffentlichungsnummer: WO 2008/017522

(56) Entgegenhaltungen:
- WO-A-99/20659
- WO-A-03/060565
- WO-A-2005/087819
- WO-A1-2007/115848
- US-A1- 2005 090 632
- SNIJDER AUKE ET AL: "End-group modification of poly(butyl acrylate) prepared by atom transfer radical polymerization: Mechanistic study using gradient polymer elution chromatography" J POLYM SCI PART A; JOURNAL OF POLYMER SCIENCE, PART A: POLYMER CHEMISTRY JUL 15 2002, Bd. 40, Nr. 14, 15. Juli 2002 (2002-07-15), Seiten 2350-2359, XP002447521 in der Anmeldung erwähnt
- LIU J ET AL: "Dihydroxyl-terminated telechelic polymers prepared by RAFT polymerization using functional trithiocarbonate as chain transfer agent" POLYMER, ELSEVIER SCIENCE PUBLISHERS B.V, GB, Bd. 45, Nr. 13, Juni 2004 (2004-06), Seiten 4413-4421, XP004509961 ISSN: 0032-3861

## Beschreibung

### Gebiet der Erfindung

Die vorliegende Erfindung betrifft die Synthese von Polymeren mit Hydroxyendgruppen, die mittels Atom transfer radical polymerization (im Folgenden kurz ATRP) hergestellt wurden. Ein besonderer Aspekt ist die Herstellung hydroxytelecheler Polymethacrylate, Polyacrylate oder Polystyrole.

Ein ganz besonderer Aspekt der vorliegenden Erfindung ist, dass durch die Zugabe des Reagenz in einem Verfahrensschritt gleichzeitig eine Entfernung der Übergangsmetallverbindungen aus der Polymerisationslösung mittels Fällung und eine Salzbildung der zuvor an den Übergangsmetall koordinierten Liganden, die wiederum eine einfache Entfernung der selben ermöglicht, erfolgt.

Die ATRP stellt ein wichtiges Verfahren zur Darstellung einer Vielzahl von Polymeren wie z.B. Polyacrylaten, Polymethacrylaten oder Polystyrolen dar. Mit dieser Art der Polymerisation ist man dem Ziel maßgeschneiderter Polymere ein gutes Stück näher gekommen. Die ATRP-Methode wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ= 5.000 - 120.000 g/mol. Ein besonderer Vorteil dabei ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

### Stand der Technik

Die Entwicklung eines Verfahrensschrittes in der ATRP, bei dem gleichzeitig das Halogen am Kettenende des Polymers entfernt wird, das Übergangsmetall vollständig gefällt wird, der Ligand in eine leicht abzutrennende ionische Form überführt wird und eine Funktionalisierung der Kettenenden mit organischen Hydroxylgruppen vorgenommen werden kann, ist in keiner Weise Stand der Technik. Dies gilt allein schon für die Kombination aus der gleichzeitigen Übergangsmetallfällung und Hydroxyfunktionalisierung der Kettenenden.

Im Weiteren stellt die vorliegende Erfindung jeweils für sich allein eine deutliche Verbesserung gegenüber dem Stand der Technik sowohl bezüglich der Endgruppenfunktionalisierung, bezüglich der Halogenentfernung als auch bezüglich der Übergangsmetallfällung dar. Eine Kombination aus allen drei Funktionen ist im Stand der Technik bis dato nicht beschrieben. Im Folgenden wird diese Schrift daher auf die Aspekte Endgruppenfunktionalisierung bzw. hydroxyfunktionalisierte ATRP-Produkte beschränkt.

Der ATRP-Prozess beruht auf einem Redoxgleichgewicht zwischen einer schlafenden und einer aktiven Spezies. Bei der aktiven Spezies handelt es sich um die nur in geringer Konzentration vorliegende wachsende, radikalische Polymerkette sowie eine Übergangsmetallverbindung in höherer Oxidationsstufe (z.B. Kupfer II). Die schlafende, bevorzugt vorliegende Spezies ist die Kombination aus der mit einem Halogen bzw. einem Pseudohalogen terminierten Polymerkette und der entsprechenden Übergangsmetallverbindung in geringerer Oxidationsstufe (z.B. Kupfer I). Dies gilt sowohl für die ATRP in der eigentlichen Form, die mit (Pseudo-)Halogen substituierten Initiatoren gestartet wird, als auch für die weiter unten beschriebene reverse ATRP, bei der das Halogen erst bei Einstellung des Gleichgewichts an die Polymerkette gebunden wird. Das Halogenatom verbleibt unabhängig von dem gewählten Verfahren nach Abbruch der Reaktion an den jeweiligen Kettenenden. Diese endständigen Halogenatome können in mehrfacher Hinsicht von Nutzen sein. In einer großen Zahl von Schriften wird die Verwendung eines solchen Polymers als Makroinitiator nach einer Aufreinigung oder durch sequentielle Zugabe weiterer Monomerfraktionen zum Aufbau von Blockstrukturen beschrieben. Als repräsentatives Beispiel sei auf US 5,807,937 bzgl. der sequentiellen Polymerisation und auf US 6,512,060 bzgl. der Synthese von Makroinitiatoren verwiesen.

Problematisch ist jedoch die dem Fachmann durchaus bekannte thermische Instabilität solcher Halogen-funktionalisierter Polymere. Insbesondere Polymethacrylate bzw. Polyacrylate erweisen sich bei Vorhandensein terminaler Halogenatome deutlich empfindlicher gegenüber einer Depolymerisation. Daher ist eine Methode zur Entfernung dieser endständigen Halogenatome von großem Interesse. Ein weit verbreitetes Verfahren basiert auf der Substitution der Halogene mit Metallalkoholaten unter Fällung des gebildeten Metallhalogenids. Ein solches Verfahren wird zum Beispiel in US 2005/090632 beschrieben. Nachteil an diesem Vorgehen ist die nur begrenzte Verfügbarkeit der Metallalkoholate, deren Kosten und dass das Verfahren nur nach einer Reinigung der Polymere in einem separaten Prozessschritt durchgeführt werden kann. Außerdem ist auf diesem Weg die direkte Funktionalisierung mit einer Hydroxylgruppe nicht möglich. Ähnliches gilt auch für andere Verfahren zur Substitution der endständigen Halogengruppen: Sowohl Azide (s. Matyjeszewski et al., Macromol. Rapid Commun, 18, 1057-66. 1997) als auch Phosphine (Coessens, Matyjaszewski, Macromol. Sci. Pure Appl. Chem., 36, 653-666, 1999) führen nur zu unvollständigen Umsätzen, sind toxikologisch sehr bedenklich, sind zur direkten Hydroxyfunktionalisierung schlecht geeignet und sind kostenintensiv. Ferner sind auch diese Verfahren nur in einer polymeranalogen Reaktion nach einer Produktaufarbeitung anwendbar.

Erfindungsgemäß wird zur Substitution der endständigen Halogenatome ein Mercaptan wie zum Beispiel Mercaptoethanol eingesetzt. Einzig in Snijder et al. (J. of Polym. Sci.: Part A: Polym. Chem.) wird eine solche Substitutionsreaktion mit Mercaptoethanol kurz beschrieben. Ein Unterschied zu der vorliegenden Erfindung ist die polymeranaloge Durchführung. In der beschriebenen Schrift wird die Substitutionsreaktion erst nach Aufreinigung des ATRP-Produktes in einer zweiten Reaktionsstufe durchgeführt. Damit ergibt sich direkt ein zweiter wichtiger Unterschied zur vorliegenden Erfindung. Der erfindungsgemäße Effekt der Fällung der Übergangsmetallverbindungen aus der ATRP-Lösung durch Zugabe von Mercaptanreagenzien wird in dieser Schrift entsprechend gar nicht beschrieben. Darüber hinaus werden in der vorliegenden Erfindung im Gegensatz zu der zitierten Schrift neuartige beidseitig an den Endgruppen funktionalisierte Tri- und Pentablockcopolymere beschrieben.

Weitere Alternativen sind das Abfangen der zeitweise radikalisch vorliegenden Kettenenden mit stabilen, hydroxyfunktionalisierten Radikalen wie Nitroxiden (siehe z.B: Beyou et al., Macromol. Chem. Phy., 202, 974-9, 2001) oder durch gezielte Rekombination der radikalischen Kettenenden unter vorheriger Verwendung Hydroxylgruppen tragender Initiatoren. Beide Verfahren benötigen einen zusätzlichen, zeitaufwändigen Eingriff in das Polymerisationsverfahren. Dies können zum Beispiel verfahrenstechnisch ungünstige Temperaturerhöhungen sein. Auch ist dem Fachmann leicht ersichtlich, dass dieses Verfahren weder die Katalysatorentfernung erleichtert, noch dass es zu den ATRP typischen Polymeren mit engen Molekulargewichtsverteilungen führen kann. Diese Methode wird in der Literatur oft als ATRA (Atom transfer radical addition) bezeichnet. Eine Variante der ATRA ist die Zugabe von Reagenzien, die in-situ in zwei Radikale zerfallen, von denen eins wiederum irreversibel ein radikalisches Kettenende abfängt und das zweite, kleinere neue Ketten startet. Nachteil dieses Vorgehens ist neben der wieder verringerten Reaktionsgeschwindigkeit die schlechte kommerzielle Verfügbarkeit der benötigten Reagenzien und das Freisetzen zusätzlicher Radikale, die entweder sehr schnell abgefangen werden müssen oder aber zu unerwünschten oligomeren Nebenprodukten führen. Beispielhaft wird dieses Verfahren in den Arbeiten von Sawamoto beschrieben (Macromolecules, 31,6708-11, 1998 und J Polym. Sci. Part A: Polym. Chem., 38, 4735-48,2000).

Eine Variante der ATRA ist das Endcapping wachsender Polymerketten mit Monomereinheiten, die einmalig radikalisch an das Kettenende eingebaut werden können, darauf aber ein stabiles halogeniertes Kettenende bilden und entsprechend ein weiteres Kettenwachstum verhindern. Dabei kann es sich zum Beispiel um Olefine handeln, die durchaus auch selbst funktionalisiert sein können. Ein Beispiel für eine solche Verbindung mit Hydroxylgruppe ist Allylalkohol (Coessens, Matyjaszewski, Macromol. Rapid Commun., 20, 127-134, 1999). In einer Polymerisation mit bifunktionellen Initiatoren und einem beidseitigen Endcapping sind auf diesem Wege Hydroxytelechele darstellbar. Nachteilig an diesem Verfahren gegenüber dem erfindungsgemäßen sind das weiterhin bromierte und damit thermisch instabile Kettenende, das fehlende parallele Ausfällen der Übergangsmetallverbindungen und ein nicht vollständiger Umsatz der Kettenenden (siehe Keul et al., Macrom. Symp., 161, 63-72, 2000).

Eine weitere Variante der ATRA stellt die so genannte ATRC (Atom transfer radical coupling) dar. Die ATRC geht auf Fukuda (e-Polymers, no.013, 2002) zurück und wird bei Matyjaszewski (Macromol. Chem. Phys., 205, 154-164, 2004) für Polystyrole näher beschrieben. Bei diesem Vorgehen werden in einem ersten Schritt Hydroxylgruppen tragende, bromierte Initiatoren zur ATRP von Styrol verwendet. Nach der Produktreinigung wird das System mit Cu⁽⁰⁾ und einem z.B. aus der ATRP bekannten Liganden versetzt. Mit diesem neuen Katalysatorsystem erfolgt unter Entfernung der endständigen Bromatome eine Kupplung der beiden Kettenenden. Die ursprünglichen, noch hydroxyfunktionalisierten Initiatorreste stellen in diesem Polymer die neuen Kettenenden. Nachteilig ist jedoch, dass das System nur für eine eingeschränkte Zahl von Monomeren anwendbar ist. So funktioniert eine Kupplung von Acrylaten oder Methacrylaten nur dann, wenn man kurze Styrolsegmente am Ende der ATRP einbaut. Nachteilig sind weiterhin die erneut getrennte Durchführung und die Zugabe weiterer Kupferverbindungen, die erneut umständlich entfernt werden müssen.

Einfacher ist dagegen die beidseitige Endgruppenfunktionalisierung bei gleichzeitig kontrollierten Polymerisationsbedingungen unter Verwendung der RAFT-Polymerisation (Reversible addition fragmentation chain transfer polymerization). Bei diesem Prozess wird das Radikal auf ein spezielles RAFT-Agens übertragen, welches im weiteren Polymerisationsverlauf z.B. wechselseitig als bifunktionelles radikalisches Übertragungsreagenz fungiert. Dabei wird bei der Übertragung ein z.B. hydroxyfunktioneller Teils des Agens an das spätere Kettenende positioniert. Die Verwendung solcher zweifach hydroxyfunktionalisierter RAFT-Agentien ist zum Beispiel in Lima et al. (J. of Polym. Sci., Part A: Polym. Chem., 43, 959-73, 2005) nachzulesen.

Ein großer Nachteil dieser RAFT-Produkte gegenüber ATRP-Produkten und insbesondere gegenüber den erfindungsgemäßen Polymeren ist die verminderte Thermostabilität der im Polymer eingebauten Reste der RAFT-Agentien, bei denen es sich zumeist um Trithiocarbonate handelt. Weitere Nachteile sind die eventuelle Produktfarbigkeit und der starke Geruch verbleibender Schwefelverbindungen, die z.B. bei einem thermischen Abbau freigesetzt werden können. Im Gegensatz dazu sind die erfindungsgemäß in die Polymerkette eingebauten Thioethergruppen thermisch deutlich stabiler. Dies erschließt sich dem Fachmann sehr leicht aus den Polymereigenschaften von freiradikalisch, unter Zugabe von Reglern auf Mercaptanbasis hergestellten Polymeren als Vergleichssubstanz.

Hydroxyfunktionalisierte Polyacrylate, Polymethacrylate oder Polystyrole können in breiten Anwendungsgebieten Verwendung finden. Dabei kann die Hydroxylgruppe gleich mehrere Funktionen ausüben. Zum einen beeinflussen polare Gruppen die Mischbarkeit von Polymeren und damit z.B. die mechanischen Eigenschaften von Polymerblends. Weiterhin haben Hydroxylgruppen eine große Bedeutung in Bezug auf Oberflächenhaftung. Dies gilt beispielsweise sowohl für die Haftung auf Oberflächen, wie es bei Beschichtungen oder Lacken gebraucht wird. Es gilt zum anderen aber auch für die Oberflächenhaftung an kleinsten Partikeln, wie es z.B. bei der Dispergierung von Pigmenten oder Füllstoffen benötigt wird. Eine dritte Bedeutung finden Hydroxylgruppen nicht zuletzt als Reaktivgruppen. Dies findet insbesondere Verwendung in Reaktivklebstoffen, Dichtmassen und Heißklebemassen. Da die nach dem erfindungsgemäßen Verfahren hergestellten Polymere über einen eher geringen Hydroxylanteil verfügen, wird in der weiteren Betrachtung des Standes der Technik die Bedeutung von Poly(meth)acrylaten mit engen Breiten der Molekulargewichtsverteilung in Reaktivklebstoffen als Beispiel betrachtet. Dies soll nur die Verbesserung des Standes der Technik an einem potentiell wichtigen Verwendungsbeispiel der nach dem erfindungsgemäßen Verfahren hergestellten Polymere darstellen. Die Beispiele dienen jedoch nicht dazu, die genaue Zusammensetzung oder die Verwendung der Polymere in irgendeiner Weise einzugrenzen:
Reaktivklebstoffe sind bei Raumtemperatur feste Substanzen. Sie werden durch Erwärmen aufgeschmolzen und auf ein Substrat aufgebracht. Beim Abkühlen verfestigt sich die Klebmasse wieder und bindet somit das Substrat. Zusätzlich vernetzen die in der Klebmasse enthaltenen Polymere durch Reaktion mit Feuchtigkeit. Durch diesen Vorgang erfolgt ein endgültiges, irreversibles Aushärten.

Derartige Klebstoffe sind zum Beispiel in US 5,021,507 beschrieben. Hauptbestandteil dieser Klebstoffe sind Verbindungen mit freien Isocyanatgruppen, welche meist durch Kondensationsreaktion eines Überschusses von Polyisocyanatgruppen mit Polyolen erhalten werden. Zur Verbesserung der Hafteigenschaften auf bestimmten Substraten wurden diesen Verbindungen mit freien Isocyanatgruppen Bindemittel, bestehend aus Polymeren aus ethylenisch ungesättigten Monomeren, zugegeben. Als Bindemittel werden typischerweise Polyalkyl(meth)acrylate mit C₁- bis C₂₀-Alkylgruppen verwendet. Diese werden aus den entsprechenden Monomeren entweder vor der Zugabe zu den Urethanen oder in deren Beisein mittels freie, radikalische Polymerisation hergestellt.

In US 5,866,656 sowie in EP 1036103 werden Reaktivschmelzklebstoffe beschrieben, bei denen die Bindemittel aus Poly(meth)acrylat kovalent an die Verbindungen mit freien Isocyanatgruppen in der Klebstoffzusammensetzung gebunden sind. Da diese Bindung meist durch eine Kondensationsreaktion erfolgt, spricht man bei solchen Klebstoffen, bei denen diese Bindung ausgebildet ist, von Klebstoffen in der Kondensationsstufe. Die so erhaltenen Klebstoffe zeichnen sich gegenüber denen in US 5,021,507 beschriebenen durch eine erhöhte Elastizität und eine verbesserte Haftung auf bestimmten Metallsubstraten sowie einer längeren offenen - zur Verarbeitung zur Verfügung stehenden - Zeit aus.

Allerdings weisen diese Reaktivschmelzklebstoffe erhebliche Nachteile auf. So zeigen sie zum Beispiel nur eine geringe Anfangsfestigkeit. Daraus resultiert eine besonders lange, nachteilige Fixierzeit nach dem Auftragen der Klebmasse.

Ein weiterer Nachteil der Reaktivklebstoffe des Standes der Technik ist die bei der Verarbeitung relevante, hohe Viskosität. Dadurch ist ein Verarbeiten des geschmolzenen Reaktivschmelzklebstoffs, vor allem das Auftragen auf poröse

Substrate, deutlich erschwert. Teilweise tritt auch eine Vergelung in der Kondensationsstufe auf.

Ein weiterer Nachteil ist, dass der extrahierbare Anteil im ausgehärteten Klebstoff recht hoch ist. Dies verringert unter anderem die Beständigkeit der Klebmasse gegenüber Lösungsmitteln.

Ein weiterer Nachteil ist eine häufig nur ungenügende Viskositätsstabilität des Reaktivschmelzklebstoffs in der Schmelze bei z.B. 130°C, wodurch vor allem die Verarbeitbarkeit erschwert wird.

Weiterhin nachteilig ist, dass die freiradikalisch polymerisierten Materialien auch einen höheren Anteil niedermolekularer Bestandteile, die an den Vernetzungsreaktionen nicht teilnehmen und den extrahierbaren Bestandteil entsprechender Reaktivschmelzklebstoffe darstellen, enthalten.

Mit der ATRP-Methode ist man dem Ziel maßgeschneiderter Polymere ein gutes Stück näher gekommen. Die ATRP wurde speziell auch mit 2-Hydroxyethyl(meth)acrylat (HEMA) als Hydroxylgruppen tragendes Monomer entwickelt (Beers et al., Macromolecules; 1999, 32, S.5772-5776).

Die oben beschriebenen Probleme wurden in WO 05/047359 insofern gelöst, dass durch Anwendung einer kontrollierten Polymerisationsmethode, in Form der ATRP, Bindemittel mit sehr engen Molekulargewichtsverteilungen zur Verfügung gestellt werden konnten, die durch den gegenüber freiradikalisch polymerisiert (Meth)acrylaten einen nur geringen Anteil hochmolekularer Bestandteile aufweisen. Diese Bestandteile bewirken in Polymermischungen insbesondere eine Erhöhung der Viskosität. Weiterhin enthalten diese Polymere auch einen deutlich geringeren Anteil niedermolekularer und damit extrahierbarer Bestandteile. Der geringere Anteil solcher Bestandteile erhöht die Wetterbeständigkeit, Verlangsamt die Produktalterung und führt zu einer deutlich verbesserten Chemikalienbeständigkeit.

Nachteil der nach WO 05/047359 dargestellten Reaktivklebstoffe ist jedoch eine statistische Verteilung der Hydroxy-, Mercapto-, bzw. Amingruppen in der Polymerkette des Bindemittels. Dies führt zu einer engmaschigen Vernetzung und einer somit verminderten Elastizität der Klebemasse. Daraus kann auch eine Verschlechterung der Substratbindung resultieren. Dieser Nachteil kommt insbesondere zum Tragen, wenn zusätzlich die Polyisocyanate als Formulierungsbestandteil des Reaktivschmelzklebstoffs mit einer größeren Zahl freier Isocyanatgruppen funktionalisiert sind. In diesem Fall ist ein Poly(meth)acrylat mit ausschließlicher Endgruppenfunktionalisierung als Coformulierungsbestandteil in mehrfacher Hinsicht von großem Vorteil: Zum einen lassen sich durch Wahl geeigneter Polyisocyanate längere Verarbeitungszeiten einstellen. Zum anderen behalten Polymernetzwerke, in denen eine Komponente nur über die Kettenendgruppen eingebaut ist, eine besondere Flexibilität. Diese erhöhte Flexibilität der Netzwerke bei gleichzeitig höherer Beständigkeit ist auch in anderen Anwendungsbereichen wie zum Beispiel bei Dichtstoffen von großer Bedeutung.

Zur Auflistung und Beschreibung der freie Isocyanatgruppen tragenden Verbindungen sei auf die WO 05/047359 verwiesen.

In WO 99/20659 wird eine Polymerisation mittels des degenerative iodine transfer radical polymerization (DIT) Mechanismus beschrieben. Dieser zeichnet sich insbesondere dadurch aus, dass er ohne Zugabe von Metallen erfolgen kann. Beschrieben wird zusätzlich die Substitution von Endgruppen mittels Schwefelverbindungen.

WO 03/060565 offenbart eine Methode zur Herstellung von hydroxytelechelen Polymethacrylaten mittels einer ATRP, in der das Polymer gegen Ende der Polymerisation mit Allylalkohol endgruppenfunktionalisiert wird. Dem Fachmann ist bekannt, dass diese Methode des Endcapping nur zu geringen Funktionalisierungsgraden führt.

In WO 2007/115848 wird ein Verfahren zur Entfernung von Übergangsmetallverbindungen aus Polymerlösungen beschrieben. Insbesondere wird die Fällung eines Kupferkatalysators mit Mercaptanen aus ATRP-Lösungen beschrieben ist. Diese Schrift gibt dem Fachmann keine Lehre zur Endgruppenfunktionalisierung eines Polymers.

### Aufgabe

Aufgabe der vorliegenden Erfindung ist es, Polymere mittels Atom transfer radical polymerization (ATRP) herzustellen, die an über 90% der zuvor polymerisationsaktiven Kettenenden Hydroxylgruppen aufweisen.

Zusätzlich ist es Aufgabe der vorliegenden Erfindung, Polymere mittels ATRP herzustellen, die keine oder nur in Spuren Halogene bzw. Pseudohalogene enthalten. Damit ist es auch Aufgabe, die thermische Stabilität dieser Polymere gegenüber halogenhaltigen Produkten zu verbessern.

Insbesondere ist es Aufgabe dieser Erfindung, Polymere zu realisieren, die mit Ausnahme der Endgruppen vollständig den Materialien entsprechen, die nach Stand der Technik mittels ATRP hergestellt werden können. Dies umfasst u.a. die Polymerarchitektur, das Molekulargewicht und die Molekulargewichtsverteilung.

Insbesondere ist es Aufgabe dieser Erfindung, die Hydroxyfunktionalisierung und die gleichzeitige Halogenentfemung im Rahmen eines großtechnisch einfach zu realisierenden und wirtschaftlichen Prozesses durchzuführen. Ganz insbesondere ist es Aufgabe, die Funktionalisierung ohne zusätzliche Produktaufarbeitung direkt am Ende des eigentlichen ATRP-Prozesses im gleichen Reaktionsgefäß durchzuführen (one-potreaction).

Parallel ist es eine Aufgabe dieser Erfindung, mit dem gleichen Verfahrensschritt gleichzeitig ein großtechnisch realisierbares Verfahren zur Abtrennung von Übergangsmetallkomplexen aus Polymerlösungen zur Verfügung zu stellen. Zugleich soll das neue Verfahren kostengünstig und schnell durchführbar sein. Darüber hinaus war es Aufgabe der vorliegenden Erfindung, ein Verfahren zur Verfügung zu stellen, das ohne aufwändige Umbauten auf bekannten, zur Lösungspolymerisation geeigneten Anlagen implementiert werden kann. Eine weitere Aufgabe war es, bereits nach einem Filtrationsschritt besonders niedrige Restkonzentrationen der Übergangsmetallkomplexverbindungen zu realisieren.

### Lösung

Gelöst wurde die Aufgabe durch Zugabe geeigneter hydroxyfunktionalisierter Schwefelverbindungen nach oder während des Abbruchs der Polymerisation. Durch Substitution der endständigen aktiven Gruppen eines mittels ATRP synthetisierten Polymers mit der Schwefelverbindung werden die jeweiligen Kettenenden hydroxyfunktionalisiert. Gleichzeitig werden die endständigen Halogenatome von dem Polymer entfernt, die als Katalysator eingesetzte Übergangsmetallkoordinationsverbindung gequenscht und damit das Metall nahezu vollständig ausgefällt. Dieses kann anschließend mittels Filtration einfach abgetrennt werden.

Im Detail führt die Zugabe von Mercaptanen zu Halogen terminierten Polymerketten, wie sie während oder am Ende eines ATRP Prozesses vorliegen, zu einer Substitution des Halogens. Am Kettenende des Polymers bildet sich somit eine Thioethergruppe, wie sie bereits aus der freiradikalischen Polymerisation mit auf Schwefel basierenden Reglern bekannt ist. Als Abspaltungsprodukt wird ein Halogenwasserstoff gebildet.

Ein ganz besonderer Aspekt der vorliegenden Erfindung ist, dass durch die Zugabe eines Reagenz in einem Verfahrensschritt gleichzeitig eine Entfernung der endständigen Halogenatome von den Polymerketten, damit einhergehend eine Hydroxyfunktionalisierung der Polymertermini, eine Entfernung der Übergangsmetallverbindungen mittels Fällung und eine Salzbildung der zuvor an den Übergangsmetall koordinierten Liganden, die wiederum eine einfache Entfernung der Liganden vom Übergangsmetall ermöglicht, erfolgt.

Im Detail erfolgt bei der Zugabe besagter Schwefelverbindung wahrscheinlich folgendes: Als Initiator werden in der ATRP Verbindungen eingesetzt, die eine oder mehrere Atome bzw. Atomgruppen X aufweisen, welche unter den Polymerisationsbedingungen des ATRP-Verfahrens radikalisch übertragbar sind. Bei der Substitution der aktiven Gruppe X am jeweiligen Kettenende des Polymers wird eine Säure der Form X-H freigesetzt. Der sich bildenden Halogenwasserstoff kann in organischen Polymerisationslösungen nicht hydrolisiert werden und verfügt somit über eine besonders ausgeprägte Reaktivität, die zu einer Protonierung der unten beschriebenen, zumeist basischen Liganden an der Übergangsmetallverbindung führt. Dieses Quenschen des Übergangsmetallkomplexes verläuft äußerst schnell und ergibt eine direkte Fällung der nun unmaskierten Übergangsmetallverbindungen.

Das Übergangsmetall fällt dabei in der Regel in der Form aus, in der es am Anfang der Polymerisation eingesetzt wurde: z.B. im Falle von Kupfer als CuBr, CuCl oder Cu₂O. Unter der Bedingung, dass das Übergangsmetall simultan z.B. durch Einleiten von Luft oder durch Zugabe von Schwefelsäure oxidiert wird, fällt die Übergangsmetallverbindung zusätzlich in der höheren Oxidationsstufe aus. Durch die erfindungsgemäße Zugabe besagter Schwefelverbindungen kann die Übergangsmetallfällung im Gegensatz zu dieser oxidationsbedingten Fällung darüber hinaus nahezu quantitativ erfolgen. So gelingt es bereits nach einem Filtrationsschritt besonders niedrige Restkonzentrationen der Übergangsmetallkomplexverbindungen von unter 5 ppm zu realisieren.

Um diesen Effekt zu erreichen, muss der erfindungsgemäße Einsatz besagter Schwefelverbindung bezogen auf die aktive Gruppe X am Polymerkettenende nur in einem Überschuss von z.B. 1,1 Äquivalenten eingesetzt werden. Entsprechendes gilt bezogen auf den Liganden L: Bei Komplexen, in denen das Übergangsmetall und der Ligand im Verhältnis 1:1 vorliegen, genügt ebenfalls ein nur sehr geringer Überschuss der Schwefelverbindung, um ein vollständiges Quenschen des Übergangmetallkomplexes zu erreichen. Beispiele für solche Liganden sind das weiter unten beschriebenen N,N,N',N",N"-Pentamethyldiethylentriamin (PMDETA) und Tris(2-aminoethyl)amin (TREN). Im Falle von Liganden, die in der Komplexverbindung in einem biäquivalenten Verhältnis zum Übergangsmetall vorliegen, ist diese Erfindung nur anwendbar, wenn das Übergangsmetall in einem deutlichen Unterschuss von z.B. 1:2 gegenüber den aktiven Gruppen X eingesetzt wird. Beispiel für einen solchen Liganden ist 2,2'-Bipyridin.

Bestandteil dieser Erfindung ist darüber hinaus, dass die verwendeten Schwefelverbindungen nahezu vollständig an die Polymerketten gebunden werden, und dass man mittels einfacher Modifikationen in der Filtration die Restschwefelanteile ganz einfach vollständig entfernen kann. Auf diese Weise erhält man Produkte, die keinen unangenehmen, schwefelverbindungsbedingten Geruch aufweisen.

Ein großer Vorzug der vorliegenden Erfindung ist die effiziente Entfernung der Übergangsmetallkomplexe aus der Lösung. Durch Anwendung des erfindungsgemäßen Verfahrens ist es möglich, den Übergangsmetallgehalt mit einer Filtration um mindestens 80 %, bevorzugt um mindestens 95 % und ganz besonders bevorzugt um mindestens 99 % zu reduzieren. In besonderen Ausführungen ist es sogar durch Anwendung des erfindungsgemäßen Verfahrens möglich, den Übergangsmetallgehalt um mehr als 99,9 % zu reduzieren.

Bevorzugt handelt es sich bei den erfindungsgemäß nach oder während des Polymerisationsabbruchs der Polymerlösung zugegebenen Reagenzien um Verbindungen, die Schwefel in organisch gebundener Form enthalten. Insbesondere bevorzugt weisen diese zur Fällung von Übergangsmetallionen bzw. Übergangsmetallkomplexen eingesetzten schwefelhaltigen Verbindungen SH-Gruppen und gleichzeitig Hydroxylgruppen auf. Als organische Verbindungen seien ganz besonders bevorzugt hydroxyfunktionalisierte Mercaptane und / oder andere funktionalisierte oder auch unfunktionalisierte Verbindungen, die eine oder mehrere Thiolgruppen und Hydroxylgruppen aufweisen und / oder unter den Lösungsbedingungen entsprechende Thiolgruppen und Hydroxylgruppen bilden können, aufgeführt. Dabei kann es sich um organische Verbindungen wie Mercaptoethanol, Mercaptopropanol, Mercaptobutanol, Mercaptopentanol oder Mercaptohexanol handeln. Bei den insbesondere bevorzugten Verbindungen handelt es sich um kommerziell leicht verfügbare, in der freiradikalischen Polymerisation als Regler eingesetzte Verbindungen. Vorteil dieser Verbindungen ist ihre leichte Verfügbarkeit, ihr niedriger Preis und die breite Variationsmöglichkeit, die eine optimale Anpassung der Fällungsreagenzien an das jeweilige Polymerisationssystem ermöglichen. Die vorliegende Erfindung lässt sich jedoch nicht auf diese Verbindungen einschränken. Entscheidend ist vielmehr, dass das eingesetzte Fällungsmittel einerseits eine -SH-Gruppe aufweist bzw. eine -SH-Gruppe unter den vorliegenden Bedingungen der Polymerlösung in situ ausbildet. Andererseits muss die besagte Verbindung eine Hydroxylgruppe bzw. eine Gruppe, die unter den vorliegenden Bedingungen eine Hydroxylgruppe ausbilden kann, aufweisen.

In der freiradikalischen Polymerisation wird die Menge an Reglern, bezogen auf die zu polymerisierenden Monomeren, zumeist mit 0,05 Gew-% bis 5 Gew-%, angegeben. In der vorliegenden Erfindung wird die Menge der eingesetzten Schwefelverbindung nicht auf die Monomere, sondern auf die Konzentration der polymerisationsaktiven Kettenenden in der Polymerlösung bezogen. Mit polymerisationsaktiven Kettenenden ist die Summe aus schlafenden und aktiven Kettenenden gemeint. Die erfindungsgemäßen schwefelhaltigen Fällungsmittel werden in diesem Sinne in 1,5 molaren Äquivalenten, bevorzugt 1,2 molaren Äquivalenten, besonders bevorzugt unter 1,1 molaren Äquivalenten und ganz besonders bevorzugt unter 1,05 molaren Äquivalenten eingesetzt. Die verbleibenden Restschwefelmengen lassen sich durch Modifikation des folgenden Filtrationsschrittes leicht entfernen.

Es ist dem Fachmann leicht ersichtlich, dass die beschriebenen Mercaptane bei einer Zugabe zur Polymerlösung während oder nach Abbruch der Polymerisation mit Ausnahme der beschriebenen Substitutionsreaktion keinen weiteren Einfluss auf die Polymere haben können. Dies gilt insbesondere für die Breite der Molekulargewichtsverteilungen, das Molekulargewicht, zusätzliche Funktionalitäten, Glastemperatur, bzw. Schmelztemperatur bei teilkristallinen Polymeren und Polymerarchitekturen.

Weiterhin ist dem Fachmann leicht ersichtlich, dass ein entsprechendes Verfahren, welches apparativ ausschließlich auf einer Filtration der Polymerlösung beruht, leicht in einen großtechnischen Prozess ohne größere Umbauten an bestehenden Lösungspolymerisationsanlagen implementierbar ist.

Ein weiterer Vorteil der vorliegenden Erfindung liegt darin, dass durch die Reduzierung auf einen oder maximal zwei Filtrationsschritte eine im Vergleich zu vielen etablierten Systemen sehr schnelle Aufarbeitung der Polymerlösung erfolgen kann.

Zudem erfolgen die Substitution, die Fällung sowie die anschließende Filtration bei einer Temperatur im Bereich zwischen 0°C und 120°C, Verfahrensparameter in einem gängigen Bereich.

Zur Reduzierung der letzten Spuren Schwefelverbindungen können Adsorptionsmittel oder Adsorptionsmittelmischungen eingesetzt werden. Dies kann parallel oder in aufeinanderfolgenden Aufarbeitungsschritten erfolgen. Die Adsorptionsmittel sind aus dem Stand der Technik bekannt, vorzugsweise ausgewählt aus der Gruppe Silica und/oder Aluminiumoxid, organische Polysäuren sowie Aktivkohle (z.B. Norit SX plus der Fa. Norit).

Auch die Entfernung der Aktivkohle kann in einem gesonderten oder in einem zur Übergangsmetallentfernung simultanen Filtrationsschritt erfolgen. In einer besonders effizienten Variante wird die Aktivkohle nicht als Feststoff zur Polymerlösung gegeben, sondern die Filtration erfolgt durch mit Aktivkohle beladene Filter, die kommerziell verfügbar sind (z.B. AKS 5 der Fa. Pall Seitz Schenk). Auch zur Anwendung kommen kann eine Kombination aus der Zugabe von den zuvor beschriebenen sauren Hilfsstoffen und Aktivkohle bzw. der Zuschlag der zuvor beschrieben Hilfsstoffe und die Filtration über mit Aktivkohle beladene Filter.

Die vorliegende Erfindung bezieht sich auf eine Endgruppenfunktionalisierung von Polymeren mit Hydroxylgruppen, die Entfernung der endständigen Halogenatome und der Übergangsmetallkomplexe aus sämtlichen mittels ATRP-Verfahren hergestellten Polymerlösungen. Im Folgenden werden die Möglichkeiten die sich aus der ATRP ergeben kurz umrissen. Diese Aufzählungen sind jedoch nicht dazu geeignet die ATRP und damit die vorliegende Erfindung eingrenzend zu beschreiben. Sie dienen vielmehr dazu, die große Bedeutung und die vielseitige Einsatzmöglichkeit der ATRP und damit auch der vorliegenden Erfindung zur Aufarbeitung entsprechender ATRP-Produkte aufzuzeigen:
Die mittels ATRP polymerisierbaren Monomere sind hinlänglich bekannt. Im Folgenden werden ein paar Beispiele aufgelistet, ohne die vorliegende Erfindung in irgendeiner Form einzuschränken. Dabei beschreibt die Schreibweise (Meth)acrylat die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Monomere die polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)-acrylat, Lauryl(meth)acrylat, Cyclohexyl(meth)acrylat, Isobornyl(meth)acrylat; Aryl-(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxy-propylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxy-methylmethacrylat, 1-Ethoxybutylmethacrylat, 1-Ethoxyethylmethacrylat, Ethoxy-methylmethacrylat, Poly(ethylenglycol)methylether(meth)acrylat und Poly-(propylenglycol)methylether(meth)acrylat. Die Monomerauswahl kann auch jeweilige hydroxyfunktionalisierte und/oder aminofunktionalisierte und/oder mercaptofunktionalisierte und/oder eine olefinisch funtkionalisierte Acrylate bzw. Methacrylate wie zum Beispiel Allylmethacrylat oder Hydroxyethylmethacrylat umfassen.

Neben den zuvor dargelegten (Meth)acrylaten können die zu polymerisierenden Zusammensetzungen auch aus anderen ungesättigten Monomere bestehen bzw. diese enthalten. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, insbesondere Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, 9-Vinylcarbazol, 3-Vinylcarbazol, 4-Vinylcarbazol, 2-Methyl-1-vinylimidazol, Vinyloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie die jeweiligen hydroxyfunktionalisierten und/oder aminofunktionalisierten und/oder mercaptofunktionalisierten und/oder eine olefinisch funktionalisierten Verbindungen. Ferner können diese Copolymere auch derart hergestellt werden, dass sie eine Hydroxy- und/oder Amino- und/oder Mercaptofunktionalität und/oder eine olefinische Funktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole.

Das Verfahren kann in beliebigen halogenfreien Lösungsmitteln durchgeführt werden. Bevorzugt werden Toluol, Xylol, Acetate, vorzugsweise Butylacetat, Ethylacetat, Propylacetat; Ketone, vorzugsweise Ethylmethylketon, Aceton; Ether; Aliphate, vorzugsweise Pentan, Hexan; Alkohole, vorzugsweise Cyclohexanol, Butanol, Hexanol aber auch Biodiesel.

Blockcopolymere der Zusammensetzung AB können mittels sequentieller Polymerisation dargestellt werden. Blockcopolymere der Zusammensetzung ABA oder ABCBA werden mittels sequentieller Polymerisation und Initiierung mit bifunktionellen Initiatoren dargestellt.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weisen die erfindungsgemäß gewonnen Polymere ein zahlenmittleres Molekulargewicht zwischen 5000 g/mol und 120000 g/mol und besonders bevorzugt zwischen 7500 g/mol und 50000 g/mol auf.

Es wurde gefunden, dass die Molekulargewichtsverteilung unter 1,8, bevorzugt unter 1,6, besonders bevorzugt unter 1,4 und idealerweise unter 1,2 liegt.

Als Initiator kann jede Verbindung eingesetzt werden, die eine oder mehrere Atome bzw. Atomgruppen X aufweist, welche unter den Polymerisationsbedingungen des ATRP-Verfahrens radikalisch übertragbar sind. Bei der aktiven Gruppe X handelt es sich in der Regel um Cl, Br, I, SCN und/oder N₃. Geeignete Initiatoren umfassen verallgemeinert folgende Formeln:
R¹R²R³C-X, R¹C(=O)-X, R¹R²R³Si-X, R¹NX₂, R¹R²N-X, (R¹)ₙP(O)ₘ-X₃₋ₙ, (R¹O)ₙP(O)ₘ-X₃₋ₙ und (R¹)(R²O)P(O)ₘ-X,
wobei X ausgewählt ist aus der Gruppe bestehend aus Cl, Br, I, OR⁴, SR⁴, SeR⁴, OC(=O)R⁴, OP(=O)R⁴, OP(=O)(OR⁴)₂, OP(=O)OR⁴, O-N(R⁴)₂, CN, NC, SCN, NCS, OCN, CNO und N₃ darstellen (wobei R⁴ eine Alkylgruppe von 1 bis 20 Kohlenstoffatomen, wobei jedes Wasserstoffatom unabhängig durch ein Halogenatom, vorzugsweise Fluorid oder Chlorid ersetzt sein kann oder Alkenyl von 2 bis 20 Kohlenstoffatomen, vorzugsweise Vinyl, Alkenyl von 2 bis 10 Kolenstoffatomen, vorzugsweise Acetylenyl, Phenyl, welches mit 1 bis 5 Halogenatomen oder Alkylgruppen mit 1 bis 4 Kohlenstoffatomen substituiert sein kann, oder Aralkyl bedeutet und wobei R¹, R² und R³ unabhängig voneinander ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, Silylgruppen, Alkylsilylgruppen, Alkoxysilylgruppen, Amingruppen, Amidgruppen, COCI, OH, CN, Alkenyl- oder Alkinylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkenyl- oder Alkenylgruppen mit 2 bis 6 Kohlenstoffatomen, welche mit Oxiranyl oder Glycidyl, Aryl, Heterocyclyl, Aralkyl, Aralkenyl (arylsubstituiertes Alkenyl, wobei Aryl wie zuvor definiert ist und Alkenyl Vinyl ist, welches mit ein oder zwei C₁ bis C₆ Alkylgruppen, in welchen ein bis alles der Wasserstoffatome, vorzugsweise eines durch Halogen substituiert sind (vorzugsweise Fluor oder Chlor, wenn ein oder mehr Wasserstoffatome ersetzt sind, und vorzugsweise Fluor, Brom oder Brom, falls ein Wasserstoffatom ersetzt ist) Alkenylgruppen mit 1 bis 6 Kohlenstoffatomen, die mit 1 bis 3 Substituenten (vorzugsweise 1) ausgewählt aus der Gruppe bestehend aus C₁ bis C₄ Alkoxy, Aryl, Heterocyclyl, Ketyl, Acetyl, Amin, Amid, Oxiranyl und Glycidyl substituiert sind und m=0 oder 1; m=0, 1 oder 2 darstellt. Vorzugsweise sind nicht mehr als zwei der Reste R¹, R² und R³ Wasserstoff, besonders bevorzugt ist maximal einer der Reste R¹, R² und R³ Wasserstoff.

Zu den besonders bevorzugten Initiatoren gehören Benzylhalogenide, wie p-Chlormethylstyrol, Hexakis(α-brommethyl)benzol, Benzylchlorid, Benzylbromid, 1-Bromi-phenylethan und 1-Chlor-i-phenylethan. Weiterhin besonders bevorzugt sind Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat oder Ethyl-2-bromisobutyrat. Bevorzugt sind auch Tosylhalogenide, wie p-Toluolsulfonylchlorid; Alkylhalogenide, wie Tetrachlormethan, Tribromethan, 1-Vinylethylchlorid oder 1-Vinylethylbromid; und Halogenderivate von Phosphorsäureestern, wie Dimethylphosphonsäurechlorid.

Eine besondere, zur Synthese von Blockcopolymeren geeignete Gruppe der Initiatoren stellen die Makroinitiatoren dar. Diese zeichnen sich dadurch aus, dass es sich bei 1 bis 3, bevorzugt 1 bis 2 und ganz besonders bevorzugt bei einem Rest aus der Gruppe R¹, R² und R³ um makromolekulare Reste handelt. Diese Makroreste können ausgewählt sein aus der Gruppe der Polyolefine, wie Polyethylen oder Polypropylen; Polysiloxane; Polyether, wie Polyethylenoxid oder Polypropylenoxid; Polyester, wie Polymilchsäure oder anderen bekannten, endgruppenfunktionalisierbaren Makromoleküle. Dabei können die makromolekularen Reste jeweils ein Molekulargewicht zwischen 500 und 100000, bevorzugt zwischen 1000 und 50000 und besonders bevorzugt zwischen 1500 und 20000 aufweisen. Auch möglich ist es, besagte Makromoleküle zur Initiierung der ATRP einzusetzen, die an beiden Enden als Initiator geeignete Gruppen aufweisen, zum Beispiel in Form eines Bromtelechelen. Mit Makroinitiatoren dieser Art ist es möglich ABA-Triblockcopolymere aufzubauen.

Eine weitere wichtige Gruppe der Initiatoren stellen die bi- oder multifunktionellen Initiatoren dar. Mit multifunktionellen Initiatormolekülen ist es zum Beispiel möglich, Sternpolymere zu synthetisieren. Mit bifunktionellen sind Tri- bzw. Pentablockcopolymere und telechele Polymere darstellbar. Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m-bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder Iod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) eingesetzt werden. Vorzugsweise werden 1,4-Butandiol-di-(2-bromo-2-methylpropionat), 1,2-Ethylenglycol-di-(2-bromo-2-methylpropionat), 2,5-Dibromadipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für ATRP sind in Chem.Rev. 2001, 101, 2921 aufgeführt. Es werden überwiegend Kupferkomplexe beschrieben - unter anderem kommen aber auch Eisen-, Kobalt-, Chrom-, Mangan-, Molybdän-, Silber-, Zink-, Palladium-, Rhodium-, Platin-, Ruthenium-, Iridium-, Ytterbium-, Samarium-, Rhenium- und/oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolecules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu monofunktionellem Initiator liegt im Allgemeinen im Bereich von 0,01:1 bis 10:1, vorzugsweise im Bereich von 0,1:1 bis 3:1 und besonders bevorzugt im Bereich von 0,5:1 bis 2:1, ohne dass hierdurch eine Beschränkung erfolgen soll.

Das molare Verhältnis Übergangsmetall zu bifunktionellem Initiator liegt im Allgemeinen im Bereich von 0,02:1 bis 20:1, vorzugsweise im Bereich von 0,2:1 bis 6:1 und besonders bevorzugt im Bereich von 1:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Entscheidend für die vorliegende Erfindung ist, dass die Liganden protonierbar sind.

Bevorzugt sind Liganden, die in der Koordinationsverbindung in einem Verhältnis von 1:1 zum Übergangsmetall vorliegen. Bei Verwendung von Liganden wie 2,2'-Bipyridin, die in einem Verhältnis zum Übergangsmetall von 2:1 im Komplex gebunden sind, kann eine vollständige Protonierung nur erfolgen, wenn das Übergangsmetall in einem deutlichen Unterschuss von z.B. 1:2 zum aktiven Kettenende X eingesetzt wird. Eine solche Polymerisation wäre jedoch gegenüber einer mit äquivalenten Komplex-X-Verhältnissen stark verlangsamt.

Für die erfindungsgemäßen hydroxyfunktionalisierten Produkte ergibt sich ein breites Anwendungsfeld. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Beispielsweise werden mittels ATRP synthetisierte Polymere als Präpolymere in Hotmelts, Klebmassen, Dichtmassen, Heißsiegelmassen, für polymeranaloge Reaktionen oder zum Aufbau von Blockcopolymeren verwendet. Die Polymere können auch Verwendung finden in Formulierungen zur kosmetischen Anwendung, in Beschichtungsmaterialien, in Lacken, als Dispergiermittel, als Polymeradditiv oder in Verpackungen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die vorliegenden Beispiele wurden auf den ATRP-Prozess bezogen. Dabei wurden die Polymerisationsparameter dergestalt ausgewählt, dass mit besonders hohen Kupferkonzentrationen gearbeitet werden musste: niedriges Molekulargewicht, 50%ige Lösung und bifunktioneller Initiator.

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden 0,25 g 2-Mercaptoethanol zugegeben. Die zuvor grünliche Lösung färbt sich spontan rot und ein roter Niederschlag fällt aus. Die Filtration erfolgt mittels einer Überdruckfiltration. Das mittlere Molekulargewicht und die Molekulargewichtsverteilung werden anschließend durch GPC-Messungen bestimmt. Von einer getrockneten Probe des Filtrats wird anschließend mittels AAS der Kupfergehalt und potentiometrisch die Hydroxylzahl bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Zuvor konnte die Bildung eines farblosen Niederschlags beobachtet werden. Zur weiteren Analyse wird eine Probe dieses Feststoffs isoliert. Auch von dem zweiten Filtrat wird mittels AAS der Kupfergehalt einer getrockneten Probe bestimmt und eine GPC-Messung vorgenommen.

### Vergleichsbeispiel 1

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60°C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden der Lösung 8 g Tonsil Optimum 210 FF (Fa. Südchemie) und 4 Gew% Wasser zugesetzt und 60 min gerührt. Die Filtration erfolgt mittels einer Überdruckfiltration über einen Aktivkohlefilter (AKS 5 der Fa. Pall Seitz Schenk). Das mittlere Molekulargewicht und die Molekulargewichtsverteilung werden anschließend durch GPC-Messungen bestimmt. Von einer getrockneten Probe des Filtrats wird anschließend mittels AAS der Kupfergehalt und potentiometrisch die Hydroxylzahl bestimmt.

**Tabelle 1**

| Beispiel | Beispiel 1 | Vergleich 1 |
|---|---|---|
| Monomer | MMA | MMA |
| Cu-Konzentration (Polymerisation) | ca. 5,5 mg/g | |
| Schwefelverbindung | Mercaptoethanol | - |
| Adsorptionsmittel | - | Alox/Silica |
| Cu-Konzentration (2. Filtration) | 0,2 µg/g | 20 µg/g |
| Äquivalente zu Cu | 1,14 | - |
| Mₙ (vor Reinigung) | 9100 | 8800 |
| M_{w}/Mₙ (vor Reinigung) | 1,18 | 1,20 |
| Mₙ (nach Reinigung) | 9100 | 8900 |
| M_{w}/Mₙ (nach Reinigung) | 1,18 | 1,21 |
| Hydroxylzahl | 12,1 mg KOH/g | <0,2 mg KOH/g |

| | | |
|---|---|---|
| MMA= Methylmethacrylat; Alox= Aluminiumoxid | | |

Aus den Beispielen ist klar ersichtlich, dass die bereits sehr guten Ergebnisse mit Adsorptionsmitteln zur Entfernung von Übergangsmetallkomplexen (in diesem Fall Kupferkomplexen) aus Polymerlösungen durch die vorhergehende Fällung mit Schwefelverbindungen klar verbessert werden können.

Der Nachweis der Endgruppensubstitution erfolgt gleich mehrfach durch Charakteriseirung verschiedener Bestandteile der aufgearbeiteten Polymerlösung:
1.) der Kupferniederschlag: der rote Niederschlag, der sich bei Zugabe der Schwefelreagenzien bildet, zeigt mit < 10 ppm einen äußerst geringen Schwefelanteil, so dass eine Fällung des Metalls als Sulfid ausgeschlossen werden kann.
2.) Das Polymer: Die Elementaranalyse der Polymerlösung zeigt auch nach Entfernen des zweiten, farblosen Niederschlags einen sehr hohen Schwefelgehalt. Nahezu der gesamte dem System zugesetzte Schwefel findet sich in der Lösung bzw. im getrockneten Produkt wieder.
3.) Der zweite, farblose Niederschlag: Sowohl ¹H-NMR-Untersuchungen als auch IR-Spektroskopie zeigten, dass es sich bei dem Niederschlag um das Ammoniumsalz des einfach protonierten Triamins PMDETA handelt. Eine Elementaranalyse zeigte, dass dieser Niederschlag schwefelfrei ist. Mittels Ionenchromatographie konnte je nach Probe ein Bromidgehalt zwischen 32 Gew% und 37 Gew% nachgewiesen werden. Dieser Wert entspricht dem Gehalt in einem reinen PMDETA-Ammoniumbromid.
4.) Eine Hydroxylzahlbestimmung des gefällten Polymers aus Beispiel 1 ergab einen Wert von 12,1 mg KOH/g. Bei einer vollständigen Umsetzung wäre bei dem gemessenen Molekulargewicht ein Wert von 12,3 mg KOH/g zu erwarten. Diese gute Übereinstimmung im Rahmen der Messgenauigkeit ist ein Indiz für einen hohen Funktionalisierungsgrad.

Aus den Ergebnissen zu Beispiel 1 erkennt man, dass entsprechende Schwefelverbindungen bezogen auf die Übergangsmetallverbindung bereits in kleinstem Überschuss eingesetzt zu einer sehr effizienten Fällung und einem hohen Funktionalisierungsgrad führen. Man erkennt aus den Beispielen auch, dass mit Thiol funktionalisierten Reagenzien eine effizientere Entfernung der Übergangsmetallverbindungen aus der Lösung realisierbar ist, als dies durch eine bereits optimierte Aufarbeitung mit Adsorptionsmitteln möglich ist.

Aus dem Vergleich der Molekulargewichte und Molekulargewichtsverteilungen vor und nach der Aufarbeitung erkennt man, dass die angewendeten Methoden mit Ausnahme der Substitution der Endgruppen keinen Einfluss auf die Polymercharakteristika haben.

## Patentansprüche

1. Verfahren zur Herstellung von Polymeren mit Hydroxylendgruppen, **dadurch gekennzeichnet, dass** Halogenatome an Polymerkettenenden mittels Zusatz einer geeigneten hydroxyfunktionalisierten Schwefelverbindung substituiert werden, dass simultan zur Abtrennung von Übergangsmetallverbindungen aus Polymerlösungen die Übergangsmetallverbindung mittels Zusatz der geeigneten Schwefelverbindung gefällt und anschließend mittels Filtration abgetrennt wird, und dass es sich bei der Schwefelverbindung um ein Mercaptan oder eine andere organische Verbindung mit einer Thiolgruppe handelt.

2. Verfahren zur Herstellung von Polymeren mit Hydroxylendgruppen gemäß Anspruch 1, **dadurch gekennzeichnet, dass** bezogen auf die Konzentration der zuvor polymerisationsaktiven Kettenenden weniger als 1,1 molare Äquivalente der Schwefelverbindung eingesetzt werden.

3. Verfahren zur Herstellung von Polymeren mit Hydroxylendgruppen gemäß Anspruch 1, **dadurch gekennzeichnet, dass** zur gleichzeitigen Entfernung von Halogenatomen aus Polymeren die Halogenatome zu über 90% durch den Zusatz der Schwefelverbindung substituiert werden.

4. Verfahren zur Herstellung von Polymeren mit Hydroxylendgruppen gemäß Anspruch 3, **dadurch gekennzeichnet, dass** zur gleichzeitigen Entfernung von Halogenatomen aus Polymeren die Halogenatome zu über 95% durch den Zusatz der Schwefelverbindung substituiert werden.

5. Verfahren zur Herstellung von Polymeren mit Hydroxylendgruppen gemäß Anspruch 1, **dadurch gekennzeichnet, dass** besagte Schwefelverbindung eine zusätzliche Hydroxylgruppe oder eine Gruppe, die unter den vorliegenden Reaktionsbedingungen eine Hydroxylgruppe ausbildet, aufweist.

6. Verfahren zur Herstellung von Polymeren mit Hydroxylendgruppen gemäß Anspruch 1, **dadurch gekennzeichnet, dass** es sich bei der Schwefelverbindung um einen in der freiradikalischen Polymerisationstechnik gebräuchlichen Regler, insbesondere um Mercaptoethanol, Mercaptopropanol, Mercaptobutanol, Mercaptopentanol oder Mercaptohexanol handelt.

7. Verfahren zur Herstellung von Polymeren mit Hydroxylendgruppen gemäß Anspruch 1, **dadurch gekennzeichnet, dass** die Schwefelverbindung nach oder während des Abbruchs einer Polymerisation zugegeben wird.

8. Verfahren zur Herstellung von Polymeren mit Hydroxylendgruppen gemäß Anspruch 1, **dadurch gekennzeichnet, dass** bezogen auf die Konzentration der zuvor polymerisationsaktiven Kettenenden unter 1,1 molare Äquivalente der Schwefelverbindung eingesetzt werden.

9. Verfahren zur Herstellung von Polymeren mit Hydroxylendgruppen gemäß Anspruch 1, **dadurch gekennzeichnet, dass** es sich um eine Polymerisation nach dem ATRP-Verfahren handelt.

10. Verfahren gemäß Anspruch 9, **dadurch gekennzeichnet, dass** es sich bei der als Katalysator in der Polymerisation eingesetzten Übergangsmetallverbindung um Kupfer-, Eisen-, Kobalt-, Chrom-, Mangan-, Molybdän-, Silber-, Zink-, Palladium-, Rhodium-, Platin-, Ruthenium-, Iridium-, Ytterbium-, Samarium-, Rhenium- und/oder Nickelverbindungen handelt.

11. Verfahren gemäß Anspruch 10, **dadurch gekennzeichnet, dass** es sich bei der als Katalysator in der Polymerisation eingesetzten Übergangsmetallverbindung um eine Kupferverbindung handelt.

12. Verfahren gemäß Anspruch 9, **dadurch gekennzeichnet, dass** man in der vorangehenden Polymerisation einen Initiator einsetzt, der eine aktive Gruppe X aufweist, und dass es sich bei der aktiven Gruppe X um Cl, Br, I, SCN und/oder N₃ handelt.

13. Verfahren gemäß Anspruch 12, **dadurch gekennzeichnet, dass** die aktive Gruppe X an den Kettenenden der Polymere durch die Schwefelverbindung gemäß den Ansprüchen 1-10 zu einem Thioether unter Freisetzung einer Säure der Form X-H substituiert werden.

14. Verfahren gemäß Anspruch 10, **dadurch gekennzeichnet, dass** der Katalysator vor der Polymerisation mit einer stickstoff-, sauerstoff-, schwefel- oder phosphorhaltigen Verbindung, die eine oder mehrere koordinative Bindungen mit dem Übergangsmetall zu einem Metall-Ligand-Komplex eingehen kann, zusammengebracht wird, und dass als Ligand N-haltige Chelatliganden verwendet werden.

15. Verfahren gemäß Anspruch 14, **dadurch gekennzeichnet, dass** der Ligand von der Säure X-H gemäß Anspruch 13 protoniert wird, dass der Ligand durch die Protonierung von dem koordinierten Übergangsmetall gelöst wird, und dass das Übergangsmetall durch die Entfernung des Liganden ausfällt.

16. Verfahren gemäß einem der vorhergehenden Ansprüche, **dadurch gekennzeichnet, dass** die Polymere durch Polymerisation von Alkylacrylaten, Alkylmethacrylaten, Styrolen, Vinylestern, Vinylethern, Fumaraten, Maleaten, Itaconaten, Acrylonitrilen und/oder anderen mittels ATRP polymerisierbaren Monomeren und/oder Mischungen aus Alkylacrylaten, Alkylmethacrylaten, Vinylestern, Vinylethern, Fumaraten, Maleaten, Itaconaten, Styrolen, Acrylonitrilen, und/oder anderen mittels ATRP polymerisierbaren Monomeren erhältlich ist.

17. Polymere hergestellt nach dem Verfahren gemäß Anspruch 1, **dadurch gekennzeichnet, dass** sie mittels ATRP hergestellt wurden, eine Molekulargewichtsverteilung kleiner 1,5 aufweisen, einen Halogengehalt kleiner 0,1 Gew% aufweisen, sie mit einem bifunktionellen Initiator hergestellt wurden, eine ABA-Triblockstruktur und an beiden Kettenenden Thioethergruppen und Hydroxylgruppen aufweisen.

18. Lineare Polymere gemäß Anspruch 17, **dadurch gekennzeichnet, dass** sie einen Halogengehalt kleiner 0,01 Gew% aufweisen.

19. Verwendung der gemäß einem der vorhergehenden Ansprüche aufgearbeiteten, hydroxytelechelen Polymere in Heißklebemassen, Klebmassen, Dichtmassen, Heißsiegelmassen, für polymeranaloge Reaktionen, in kosmetischen Anwendungen, in Beschichtungsmaterialien, als Dispergiermittel, als Polymeradditiv oder in Verpackungen.

## Claims

1. Process for the preparation of polymers having hydroxy end groups, **characterized in that** halogen atoms are substituted at polymer chain ends by means of addition of a suitable hydroxy-functionalized sulfur compound, **in that**, simultaneously, for removal of transition metal compounds from polymer solutions, the transition metal compound is precipitated by means of addition of the suitable sulfur compound and then removed by means of filtration, and **in that** the sulfur compound involves a mercaptan or another organic compound having a thiol group.

2. Process for the preparation of polymers having hydroxy end groups, according to Claim 1, **characterized in that**, based on the concentration of the chain ends previously active in polymerization, less than 1.1 molar equivalents of the sulfur compound are used.

3. Process for the preparation of polymers having hydroxy end groups, according to Claim 1, **characterized in that**, for the simultaneous removal of halogen atoms from polymers, over 90% of the halogen atoms are substituted through the addition of the sulfur compound.

4. Process for the preparation of polymers having hydroxy end groups, according to Claim 3, **characterized in that**, for the simultaneous removal of halogen atoms from polymers, over 95% of the halogen atoms are substituted through the addition of the sulfur compound.

5. Process for the preparation of polymers having hydroxyl end groups, according to Claim 1, **characterized in that** said sulfur compound has an additional hydroxy group or a group which under the present reaction conditions forms a hydroxy group.

6. Process for the preparation of polymers having hydroxyl end groups, according to Claim 1, **characterized in that** the sulfur compound involves a chain transfer agent familiar in free-radical polymerization technology, in particular mercaptoethanol, mercaptopropanol, mercaptobutanol, mercaptopentanol, or mercaptohexanol.

7. Process for the preparation of polymers having hydroxyl end groups, according to Claim 1, **characterized in that** the sulfur compound is added after or during the termination of a polymerization.

8. Process for the preparation of polymers having hydroxy end groups, according to Claim 1, **characterized in that**, based on the concentration of the chain ends previously active in polymerization, under 1.1 molar equivalents of the sulfur compound are used.

9. Process for the preparation of polymers having hydroxy end groups, according to Claim 1, **characterized in that** it involves a polymerization by the ATRP process.

10. Process according to Claim 9, **characterized in that** the transition metal compound used as catalyst in the polymerization involves copper compounds, iron compounds, cobalt compounds, chromium compounds, manganese compounds, molybdenum compounds, silver compounds, zinc compounds, palladium compounds, rhodium compounds, platinum compounds, ruthenium compounds, iridium compounds, ytterbium compounds, samarium compounds, rhenium compounds, and/or nickel compounds.

11. Process according to Claim 10, **characterized in that** the transition metal compound used as catalyst in the polymerization involves a copper compound.

12. Process according to Claim 9, **characterized in that** the preceding polymerization uses an initiator which has an active group X, and **in that** the active group X involves Cl, Br, I, SCN, and/or N₃.

13. Process according to Claim 12, **characterized in that** the active group X is substituted at the chain ends of the polymers by the sulfur compound, according to claims 1 to 10, to give a thioether, with liberation of an acid of type X-H.

14. Process according to Claim 10, **characterized in that**, prior to the polymerization, the catalyst is combined with a nitrogen-, oxygen-, sulfur-, or phosphorus-containing compound which can form one or more coordinative bonds to the transition metal to give a metal-ligand complex, and **in that** the ligands used comprise N-containing chelating ligands.

15. Process according to Claim 14, **characterized in that** the ligand is protonated by the acid X-H according to Claim 13, and **in that** the protonation releases the ligand from the coordinated transition metal, and **in that** the removal of the ligand precipitates the transition metal.

16. Process according to any of the preceding claims, **characterized in that** the polymers are obtainable through polymerization of alkyl acrylates, of alkyl methacrylates, of styrenes, of vinyl esters, of vinyl ethers, of fumarates, of maleates, of itaconates, of acrylonitriles, and/or of other monomers polymerizable by means of ATRP, and/or mixtures composed alkyl acrylates, of alkyl methacrylates, of vinyl esters, of vinyl ethers, of fumarates, of maleates, of itaconates, of styrenes, of acrylonitriles, and/or of other monomers polymerizable by means of ATRP.

17. Polymers prepared by the process according to Claim 1, **characterized in that** they have been prepared by means of ATRP, their polydispersity is smaller than 1.5, their halogen content is smaller than 0.1% by weight, they have been prepared using a bifunctional initiator, they have ABA triblock structure, and they have thio ether groups and hydroxy groups at both chain ends.

18. Linear polymers according to Claim 17, **characterized in that** their halogen content is smaller than 0.01% by weight.

19. Use, in hot-melt or other adhesive compositions, or hot-melt or other sealing compositions, for polymer-analogous reactions, in cosmetic applications, in coating materials, as dispersing agents, as polymer additive, or in packaging, of the hydroxytelechelic polymers worked up according to any of the preceding claims.

## Revendications

1. Procédé pour la préparation de polymères à groupes hydroxy en bout de chaîne, **caractérisé en ce qu'**on remplace des atomes d'halogène aux extrémités de chaînes des polymères par addition d'un composé soufré approprié, muni d'une fonctionnalité hydroxy, **en ce que** simultanément pour la séparation de composés contenant des métaux de transition d'avec des solutions de polymères on fait précipiter le composé contenant un métal de transition par addition du composé soufré approprié et ensuite on le sépare par filtration, et **en ce que** le composé soufré consiste en un mercaptan ou un autre composé organique comportant un groupe thiol.

2. Procédé pour la préparation de polymères à groupes hydroxy en bout de chaîne selon la revendication 1, **caractérisé en ce que** par rapport à la concentration des extrémités de chaîne actives pour la polymérisation on utilise moins de 1,1 équivalent molaire du composé soufré.

3. Procédé pour la préparation de polymères à groupes hydroxy en bout de chaîne selon la revendication 1, **caractérisé en ce que** pour l'élimination simultanée d'atomes d'halogène de polymères on remplace les atomes d'halogène à raison de plus de 90 % par l'addition du composé soufré.

4. Procédé pour la préparation de polymères à groupes hydroxy en bout de chaîne selon la revendication 3, **caractérisé en ce** pour l'élimination simultanée d'atomes d'halogène de polymères on remplace les atomes d'halogène à raison de plus de 95 % par l'addition du composé soufré.

5. Procédé pour la préparation de polymères à groupes hydroxy en bout de chaîne selon la revendication 1, **caractérisé en ce que** ledit composé soufré comporte un groupe hydroxy supplémentaire ou un groupe qui forme un groupe hydroxy dans les conditions réactionnelles présentes.

6. Procédé pour la préparation de polymères à groupes hydroxy en bout de chaîne selon la revendication 1, **caractérisé en ce** le composé soufré consiste en un régulateur usuel dans la technique de polymérisation à radicaux libres, en particulier en mercaptoéthanol, mercaptopropanol, mercaptobutanol, mercaptopentanol ou mercaptohexanol.

7. Procédé pour la préparation de polymères à groupes hydroxy en bout de chaîne selon la revendication 1, **caractérisé en ce que** le composé soufré est ajouté après ou pendant l'arrêt d'une polymérisation.

8. Procédé pour la préparation de polymères à groupes hydroxy en bout de chaîne selon la revendication 1, **caractérisé en ce que** par rapport à la concentration des extrémités de chaîne préalablement actives pour la polymérisation on utilise moins de 1,1 équivalent molaire du composé soufré.

9. Procédé pour la préparation de polymères à groupes hydroxy en bout de chaîne selon la revendication 1, **caractérisé en ce qu'**il s'agit d'une polymérisation selon le procédé ATRP.

10. Procédé selon la revendication 9, **caractérisé en ce que** le composé contenant un métal de transition, utilisé comme catalyseur dans la polymérisation, est choisi parmi des composés contenant du cuivre, du fer, du cobalt, du chrome, du manganèse, du molybdène, de l'argent, du zinc, du palladium, du rhodium, du platine, du ruthénium, de l'iridium, de l'ytterbium, du samarium, du rhénium et/ou du nickel.

11. Procédé selon la revendication 10, **caractérisé en ce que** le composé contenant un métal de transition, utilisé comme catalyseur dans la polymérisation, consiste en un composé contenant du cuivre.

12. Procédé selon la revendication 9, **caractérisé en ce qu'**on utilise dans la polymérisation précédente un amorceur qui comporte un groupe actif X, et **en ce que** le groupe actif X consiste en Cl, Br, I, SCN et/ou N₃.

13. Procédé selon la revendication 12, **caractérisé en ce que** le groupe actif X est remplacé aux extrémités de chaînes des polymères par le composé soufré selon les revendications 1-10, par un thioéther avec libération d'un acide de forme X-H.

14. Procédé selon la revendication 10, **caractérisé en ce que** le catalyseur avant la polymérisation est réuni avec un composé azoté, oxygéné, soufré ou phosphoré, qui peut entrer en une ou plusieurs liaisons de coordination avec le métal de transition, pour donner un complexe ligand-métal, et **en ce qu'**on utilise comme ligand des ligands chélate azotés.

15. Procédé selon la revendication 14, **caractérisé en ce que** le ligand de l'acide X-H selon la revendication 13 est protoné, **en ce que** le ligand est dissous par la protonation par le métal de transition coordonné, et **en ce que** le métal de transition est précipité par l'élimination du ligand.

16. Procédé selon l'une quelconque des revendications précédentes, **caractérisé en ce que** les polymères peuvent être obtenus par polymérisation d'acrylates d'alkyle, de méthacrylates d'alkyle, de styrènes, d'esters vinyliques, d'éthers vinyliques, de fumarates, de maléates, d'itaconates, d'acrylonitriles et/ou d'autres monomères polymérisables par ATRP et/ou de mélanges d'acrylates d'alkyle, de méthacrylates d'alkyle, d'esters vinyliques, d'éthers vinyliques, de fumarates, de maléates, d'itaconates, de styrènes, d'acrylonitriles et/ou d'autres monomères polymérisables par ATRP.

17. Polymères préparés conformément au procédé selon la revendication 1, **caractérisés en ce qu'**ils ont été préparés par ATRP, présentent une distribution de masse moléculaire inférieure à 1,5, présentent une teneur en halogène inférieure à 0,1 % en poids, ils ont été préparés avec un amorceur bifonctionnel, présentent une structure triséquencée ABA et comportent des groupes thioéther et des groupes hydroxy aux deux extrémités de la chaîne.

18. Polymères linéaires selon la revendication 17, **caractérisés en ce qu'**ils présentent une teneur en halogène inférieure à 0,01 % en poids.

19. Utilisation des polymères hydroxytéléchéliques traités selon l'une quelconque des revendications précédentes, dans les matières adhésives à chaud, des matières adhésives, des matières d'étanchéité, des matières de thermosoudage, pour des réactions conduisant à des polymères analogues, dans des applications cosmétiques, dans des matériaux de revêtement, en tant que dispersant, en tant qu'additif à des polymères ou dans des emballages.
